# FASCICULE DE BREVET EUROPEEN

(11) **EP 1 907 785 B1**
(45) Date de publication et mention de la délivrance du brevet: **25.11.2009**
(21) Numéro de dépôt: 06794169.0
(22) Date de dépôt: 13.07.2006
(51) Int. Cl.: F42B 15/38, B64G 1/34

(54) **PIECE A RUPTURE PYROTECHNIQUE DETONANTE.**
FEUERWERKSKNALLKÖRPER
DETONATING PYROTECHNICAL RUPTURE PART

(30) Priorité: 22.07.2005 FR 0507800
(43) Date de publication de la demande: 09.04.2008
(73) Titulaire: ASTRIUM SAS, 75016 Paris (FR)
(72) Inventeur: KISTER, Thomas, F-78780 Vaux/Seine (FR); COUSIN, Jean-Yves, F-59880 Armentières (FR)
(74) Mandataire: Bonnetat, Christian
(86) Numéro de dépôt international: PCT/FR2006/001710
(87) Numéro de publication internationale: WO 2007/010119

(56) Documents cités:
- US-A- 3 230 885
- US-A- 3 453 960
- US-A- 3 633 456
- US-A- 5 109 749

## Description

La présente invention concerne une pièce à rupture pyrotechnique détonante, tout particulièrement, quoique non exclusivement, appropriée à être utilisée dans les lanceurs spatiaux. Elle sera ci-après décrite plus particulièrement dans cette dernière application.

On sait que certains éléments des lanceurs spatiaux, tels que des étages adjacents, sont reliés mécaniquement entre eux par une pièce structurale destinée à assurer la transmission des efforts mécaniques entre lesdits éléments tant que cela est nécessaire et pourvue de moyens de séparation pyrotechniques à détonation, intégrés à ladite pièce structurale et aptes à la rompre le long- d'une ligne de séparation, rectiligne ou curviligne, lorsque lesdits éléments doivent être séparés les uns des autres. Des pièces semblables permettent également la découpe des structures porteuses de satellites à bord des lanceurs.

Par le brevet US-A-3 453 960, on connaît déjà une telle pièce à rupture pyrotechnique détonante comportant :
- un premier profilé formant la base de ladite pièce et pourvu d'un talon longitudinal saillant en forme de crochet, d'une gorge longitudinale disposée du côté de la concavité dudit talon et d'une nervure longitudinale saillante ;
- un cordeau pyrotechnique longitudinal disposé dans ladite gorge ; et
- un second profilé rapporté audit premier profilé de manière à s'appuyer contre ladite nervure longitudinale saillante du côté opposé audit talon, ledit second profilé coopérant avec ledit talon pour fermer ladite gorge et servir d'enclume audit cordeau pyrotechnique.

Ainsi, théoriquement, lorsque ledit cordeau pyrotechnique est mis à feu, il engendre une détonation qui rompt ledit premier profilé au niveau de la gorge.

Cependant, dans cette pièce à rupture pyrotechnique détonante connue, il peut arriver que la mise à feu du cordeau pyrotechnique n'entraîne pas la rupture complète dudit premier profilé.

La présente invention a pour objet de remédier à cet inconvénient.

A cette fin, selon l'invention, la pièce à rupture pyrotechnique détonante du type décrit ci-dessus est remarquable en ce que :
- le talon dudit premier profilé comporte une première facette longitudinale plane du côté interne de son extrémité libre, ladite première facette étant inclinée en divergeant vers l'extérieur du crochet formé par ledit talon ;
- ledit second profilé comporte, du côté externe de son extrémité libre en regard dudit talon, une seconde facette longitudinale plane inclinée convergeant vers l'intérieur du crochet formé par ledit talon ;
- un premier jeu est ménagé entre lesdites première et seconde facettes ; et
- ledit corbeau pyrotechnique est logé dans ladite gorge avec un second jeu parallèlement à l'épaisseur desdits premier et second profilés.

Pour les raisons indiquées ci-après, on obtient ainsi une rupture franche dudit premier profilé au niveau de ladite gorge, lors de la détonation engendrée par la mise à feu dudit cordeau pyrotechnique.

Grâce auxdites première et seconde facettes longitudinales inclinées, on obtient un déboîtement aisé des deux parties de ladite pièce résultant de la rupture de celle-ci par l'action du cordeau détonant. Le premier jeu ménagé entre lesdites première et seconde facettes peut être égal à quelques dixièmes de mm, la valeur de ce jeu résultant d'un compromis entre l'efficacité de rupture et la facilité de montage des éléments de ladite pièce à rupture pyrotechnique. Dans ces conditions, l'effet de coin favorisant le déboîtement des deux parties de la pièce rompue n'intervient qu'après résorption dudit jeu due au gonflement dudit cordeau pyrotechnique.

C'est également pour des raisons d'efficacité de la rupture détonante que ledit cordeau pyrotechnique est logé dans ladite gorge avec le second jeu parallèle à l'épaisseur desdits premier et second profilés. Ce second jeu peut également être égal à quelques dixièmes de mm et il résulte d'un compromis semblable à celui indiqué ci-dessus.

De préférence, des moyens sont prévus pour positionner le cordeau pyrotechnique dans ladite gorge parallèlement à la direction correspondant à la largeur desdits premier et second profilés.

De préférence, afin de rendre plus aisée la fixation dudit second profilé sur ledit premier, la largeur du second profilé est choisie inférieure à celle qu'exige une bonne coopération entre lesdits premier et second profilés pour fermer ladite gorge et on utilise des cales que l'on dispose entre ladite nervure et ledit second profilé. Ainsi, celui-ci s'appuie contre ladite nervure par l'intermédiaire desdites cales. Celles-ci sont réparties le long desdits premier et second profilés en correspondance avec les moyens de fixation de ces derniers et sont fixées par ces moyens de fixation. En variante, lesdites cales peuvent former un troisième profilé continu, s'étendant sur toute la longueur desdits premier et second profilés et solidarisé de ces derniers par lesdits moyens de fixation.

Les figures du dessin annexé feront bien comprendre comment l'invention peut être réalisée. Sur ces figures, des références identiques désignent des éléments semblables.
La figure 1 est une vue en coupe transversale, correspondant à la ligne I-I de la figure 2, d'un exemple de réalisation de la pièce à rupture pyrotechnique détonante conforme à la présente invention.
La figure 2 est une vue de face d'une portion longitudinale de ladite pièce.
La figure 3A illustre, en vue semblable à la figure 1, l'instant de la rupture de ladite pièce au moment de la détonation engendrée par le cordeau pyrotechnique.
La figure 3B illustre, également en vue semblable à la figure 1, le déboîtement naturel, parallèlement à la largeur de ladite pièce, des deux parties de celle-ci après rupture.

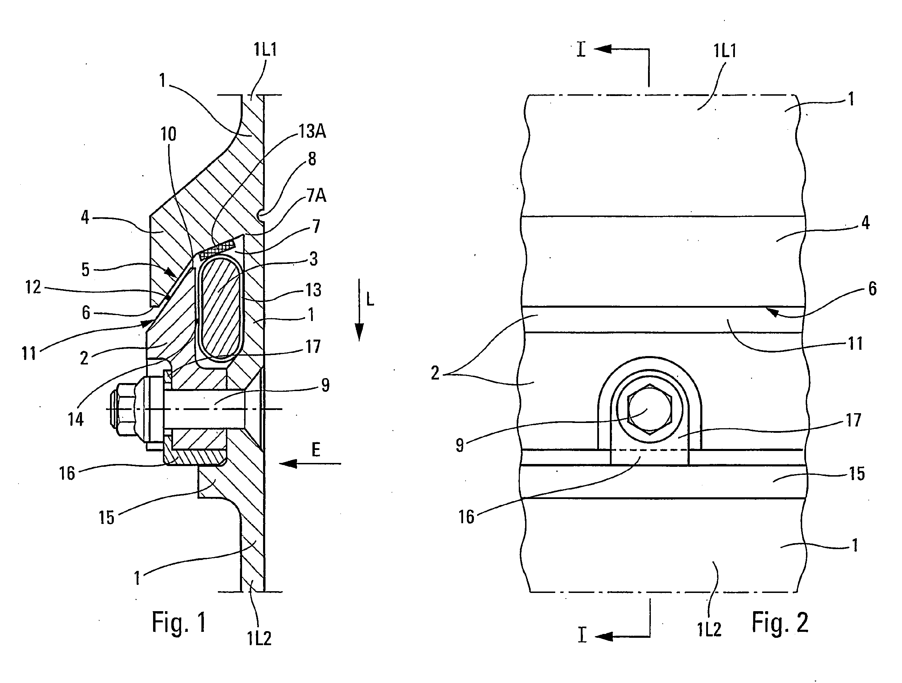

La pièce à rupture pyrotechnique, montrée par les figures 1 et 2 et conforme à la présente invention, comporte un profilé de base 1 et un profilé d'enclume 2, par exemple en aluminium, ainsi qu'un cordeau pyrotechnique détonant 3. Cette pièce peut être rectiligne, curviligne, cylindrique, etc ... en fonction de la forme de la ligne de découpe désirée entre deux éléments (non représentés) solidarisés de toute manière connue des bords longitudinaux 1 L1 et 1 L2 du profilé de base 1. Ce dernier fait partie de la structure formée par lesdits éléments et assure la transmission des efforts mécaniques entre ceux-ci.

Le profilé de base 1 comporte un talon longitudinal saillant 4, en forme de crochet, pourvu d'une facette longitudinale plane 5 du côté interne de son extrémité libre 6. La facette longitudinale 5 est inclinée et diverge vers l'extérieur du crochet formé par ledit talon 4. Par ailleurs, le profilé de base 1 est pourvu d'une gorge longitudinale 7 à fond incliné déterminant avec ledit profilé de base 1 une rainure de fond longitudinale 7A, à faible rayon de courbure, ladite gorge longitudinale 7 étant disposée du côté de la concavité dudit talon 4 et une rainure de fin de rupture 8 étant pratiquée-dans ledit profilé de base 1 du côté opposé à ladite gorge 7.

Le profilé d'enclume 2 est rapporté au profilé de base 1 et il est solidarisé de ce dernier par des boulons 9, traversant lesdits profilés 2 et répartis le long de ceux-ci. Ce profilé d'enclume 2 comporte, du côté externe de son extrémité libre 10 en regard du talon 4, une facette longitudinale plane 11 inclinée et convergeant vers l'intérieur du crochet formé par le talon 4.

L'extrémité libre 10 du profilé d'enclume 2 pénètre dans le crochet formé par le talon 4, de façon à fermer ladite gorge 7, les facettes inclinées 5 et 11 étant alors en regard l'une de l'autre, mais espacées d'un jeu 12 de quelques dixièmes de mm.

A l'intérieur de ladite gorge 7 ainsi fermée est disposé ledit cordeau pyrotechnique longitudinal 3, dont l'enveloppe externe 13 est positionnée axialement, parallèlement à la direction L correspondant à la largeur desdits profilés 1 et 2, par des moyens 13A, formés de plots discontinus ou au contraire d'une bande longitudinale continue. Les moyens de positionnement 13A garantissent de plus l'intégrité du cordeau pyrotechnique 3, lors de son fonctionnement, en l'isolant. Au contraire, parallèlement à la direction E, correspondant à l'épaisseur desdits profilés 1 et 2, l'enveloppe externe 13 du cordeau pyrotechnique est logée avec un jeu 14, par exemple de l'ordre de quelques dixièmes de mm.

Le profilé de base 1 comporte de plus une nervure longitudinale saillante 15 contre laquelle ledit profilé d'enclume 2 s'appuie, du côté opposé à son extrémité libre 10, par l'intermédiaire de cale(s) 16. On peut prévoir une unique cale 16 continue, sous la forme d'un profilé courant tout au long des profilés 1 et 2, ou bien une pluralité de cales 16 discontinues réparties le long de ces derniers en correspondance avec lesdits boulons 9. Dans les deux cas, il est prévu des pattes 17 pour permettre la fixation de la ou des cale(s) 16, par exemple par l'intermédiaire des boulons 9.

A sa mise à feu, le cordeau détonant 3 engendre des ondes de choc orthogonalement à lui-même, ces ondes assurant la mise en vitesse de son enveloppe 13 et conduisant à l'expansion de la section de cette dernière.

Sous l'effet de la détonation, l'enveloppe 13 est mise en vitesse par onde de choc, le jeu 14, parallèle à la direction E, permettant à cette enveloppe 13 d'acquérir une vitesse homogène suffisante pour engendrer, lors de son impact sur les profilés 1 et 2, une onde de choc capable de mettre en vitesse les parois correspondantes desdits profilés.

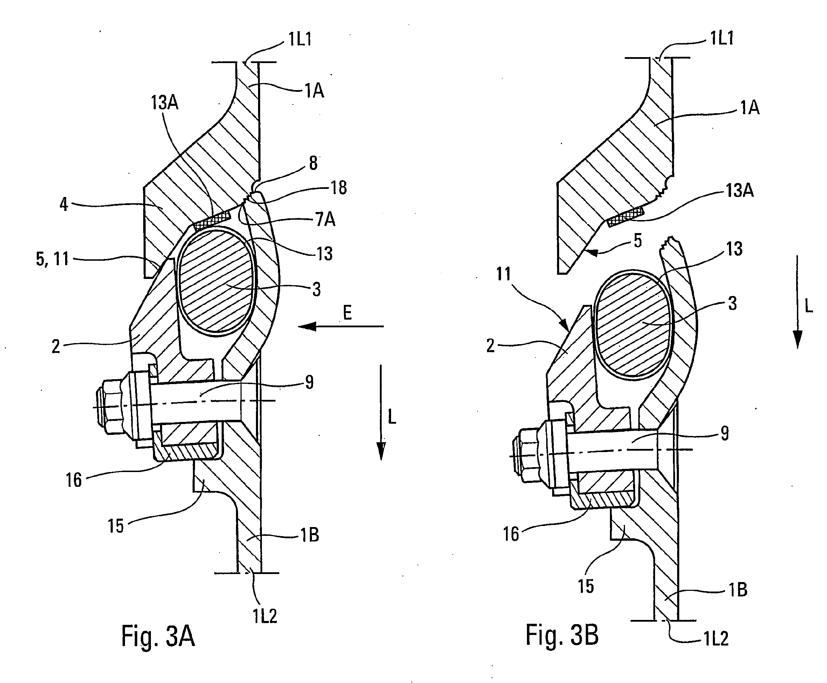

La mise en mouvement du profilé 1 amorce la rupture de celui-ci suivant une ligne 18 (voir la figure 3A) partant de ladite rainure de fond 7A, à faible rayon de courbure, de la gorge 7 et débouchant dans la rainure de fin de rupture 8.

Le jeu 12 entre les facettes inclinées 5 et 11 permet au profilé d'enclume 2 d'acquérir une vitesse homogène suffisante pour engendrer, lors de son impact avec le talon 4, une onde de choc capable de mettre en vitesse ledit talon. Le mouvement du talon 4 du profil 1 permet d'accroître la découpe suivant la ligne 18.

Ainsi, les mouvements opposés de l'enveloppe 13 et du talon 4 permettent la découpe du profilé 1 selon la ligne 18.

Le jeu 12 entre les facettes inclinées 5 et 11 laisse au train d'ondes de choc le temps d'assurer la découpe 18 avant que le gonflement transversal du cordeau pyrotechnique oblige la facette inclinée 11 du profilé 2 à venir au contact de la facette inclinée 5 du profilé 1 (figure 3A).

Lorsque les facettes inclinées 5 et 11 sont au contact l'une de l'autre, la force exercée, parallèlement à la direction E, par le gonflement transversal du cordeau pyrotechnique comporte une composante, parallèle à la face 5 du talon 4, qui est appliquée sur le profilé 2 et qui facilite le déboîtement, parallèlement à la direction L, des deux parties 1 A et 1 B du profilé 1 disposées de part et d'autre de la ligne de rupture 18 (figure 3B).

Bien entendu, cette composante parallèle à la face 5 tend à cisailler les boulons 9 et à les déformer par flexion par basculement du profilé 2. Cependant, du fait que le profilé 2 est en appui sur la nervure 15, le cisaillement desdits boulons 9 est empêché et seul, éventuellement, un basculement, d'amplitude limitée, du profilé 2 se produit à l'opposé du profilé 1.

On obtient ainsi, comme le montre la figure 3B, la séparation aisée des parties 1 A et 1 B du profilé 1, ladite partie 1 B portant le profilé 2 et le cordeau pyrotechnique détonant 3.

Bien entendu, quoique sur les figures on ait représenté la talon 4 en haut et le profilé 2 en bas, il va de soi que cette disposition n'est pas limitative et que la pièce à rupture pyrotechnique détonant peut être utilisée dans d'autres positions, par exemple avec le profilé 2 en haut et le talon 4 en bas.

## Revendications

1. Pièce à rupture pyrotechnique détonante comportant :
- un premier profilé (1) formant la base de ladite pièce et pourvu d'un talon longitudinal saillant (4) en forme de crochet, d'une gorge longitudinale (7) disposée du côté de la concavité dudit talon (4) et d'une nervure longitudinale saillante (15) ;
- un cordeau pyrotechnique longitudinal (3) disposé dans ladite gorge (7) ;
- un second profilé (2) rapporté audit premier profilé (1) de manière à s'appuyer contre ladite nervure longitudinale saillante (15) du côté opposé audit talon (4), ledit second profilé (2) coopérant avec ledit talon (4) pour fermer ladite gorge (7) et servir d'enclume audit cordeau pyrotechnique (3),
**caractérisée en ce que** :
- le talon (4) dudit premier profilé (1) comporte une première facette longitudinale plane (5) du côté interne de son extrémité libre (6), ladite première facette (5) étant inclinée en divergeant vers l'extérieur du crochet formé par ledit talon (4) ;
- ledit second profilé (2) comporte, du côté externe de son extrémité libre (10) en regard dudit talon (4), une seconde facette longitudinale plane (11) inclinée convergeant vers l'intérieur du crochet formé par ledit talon (4) ;
- un premier jeu (12) est ménagé entre lesdites première et seconde facettes (5, 11) ; et
- ledit cordeau pyrotechnique (3) est logé dans ladite gorge (7) avec un second jeu (14) parallèlement à l'épaisseur (E) desdits premier et second profilés (1, 2).

2. Pièce à rupture pyrotechnique détonante selon la revendication 1, **caractérisée en ce que** ledit premier jeu (12) ménagé entre lesdites première et seconde facettes (5, 11) est égal à quelques dixièmes de mm.

3. Pièce à rupture pyrotechnique détonante selon l'une des revendications 1 ou 2,
**caractérisée en ce que** ledit second jeu (14) ménagé entre ledit cordeau pyrotechnique (3) et la gorge (7) est égal à quelques dixièmes de mm.

4. Pièce à rupture pyrotechnique détonante selon l'une des revendications 1 à 3,
**caractérisée en ce qu'**elle comporte des moyens (1 3A) pour positionner ledit cordeau pyrotechnique (3) dans la gorge (7) parallèlement à la direction (L) correspondant à la largeur desdits premier et second profilés (1,2).

5. Pièce à rupture pyrotechnique détonante selon l'une des revendications 1 à 4,
**caractérisée en ce que** ledit second profilé (2) s'appuie contre ladite nervure (15) par l'intermédiaire de cale(s) (16).

6. Pièce à rupture pyrotechnique détonante selon la revendication 5, dans laquelle lesdits premier et second profilés (1, 2) sont solidarisés par l'intermédiaire de moyens de fixation (9) répartis le long de ceux-ci, **caractérisée en ce que** lesdites cales (16) sont réparties le long desdits premier et second profilés (1, 2) en correspondance avec lesdits moyens de fixation (9) et sont fixées par ces derniers.

7. Pièce à rupture pyrotechnique détonante selon la revendication 5, dans laquelle lesdits premier et second profilés (1,2) sont solidarisés par l'intermédiaire de moyens de fixation (9) répartis le long de ceux-ci, **caractérisée en ce que** lesdites cales forment un troisième profilé continu (16) s'étendant sur toute la longueur desdits premier et second profilés (1, 2) et solidarisé de ceux-ci par lesdits moyens de fixation (9).

## Claims

1. A detonating pyrotechnical rupture part including:
- a first profile (1) forming the base of said part and provided with a hook-shaped projecting longitudinal heel (4), with a longitudinal groove (7) provided on the side of the concavity of said heel (4) and with a projecting longitudinal rib (15);
- a longitudinal pyrotechnical fuse (3) provided in said groove (7);
- a second profile (2) related to said first profile (1) so as to bear against said projecting longitudinal rib (15) on the side opposite said heel (4), said second profile (2) cooperating with said heel (4) to close said groove (7) and serve as an anvil for said pyrotechnical fuse (3),
**characterised in that**:
- the heel (4) of said first profile (1) includes a first planar longitudinal facet (5) on the inner side of its free end (6), said first facet (5) being tilted by diverging outwards from the hook formed by said heel (4);
- said second profile (2) includes, on the outer side of its free end (10) facing said heel (4), a second planar longitudinal facet (11) tilted by converging inwards from the hook formed by said heel (4);
- a first set (12) is provided between said first and second facets (5, 11); and
- said pyrotechnical fuse (3) is accommodated in said groove (7) with a second set (14) parallel to the thickness (E) of said first and second profiles (1, 2).

2. The detonating pyrotechnical rupture part according to claim 1,
**characterised in that** said first set (12) provided between said first and second facets (5, 11) is equal to a few tens mm.

3. The detonating pyrotechnical rupture part according to one of claims 1 and 2,
**characterised in that** said second set (14) provided between said pyrotechnical fuse (3) and the groove (7) is equal to a few tens mm.

4. The detonating pyrotechnical rupture part according to any of claims 1 to 3,
**characterised in that** it includes means (13A) for locating said pyrotechnical fuse (3) in the groove (7) parallel to the direction (L) corresponding to the width of said first and second profiles (1, 2).

5. The detonating pyrotechnical rupture part according to any of claims 1 to 4,
**characterised in that** said second profile (2) bears against said rib (15) through wedge(s) (16).

6. The detonating pyrotechnical rupture part according to claim 5, wherein said first and second profiles (1, 2) are made integral with each other through fastening means (9) distributed along them, **characterised in that** said wedges (16) are distributed along said first and second profiles (1, 2) correspondingly with said fastening means (9) and are fastened by them.

7. The detonating pyrotechnical rupture part according to claim 5, wherein said first and second profiles (1, 2) are made integral with each other through fastening means (9) distributed along them, **characterised in that** said wedges form a third continuous profile (16) extending throughout the length of said first and second profiles (1, 2) and made integral therewith through said fastening means (9).

## Patentansprüche

1. Feuerwerksknallkörper, umfassend:
- ein erstes Profil (1), das die Grundlage des Körpers bildet und mit einem vorspringenden hakenförmigen Längsansatz (4), einer Längsauskehlung (7), die auf der Seite der Konkavität des Ansatzes (4) angeordnet ist, und einer vorspringenden Längsrippe (15) versehen ist;
- eine längliche Feuerwerkszündschnur (3), die in der Auskehlung (7) angeordnet ist;
- ein zweites Profil (2), das derart an das erste Profil (1) angeformt wird, dass es sich an der vorspringenden Längsrippe (15) auf der Seite gegenüber dem Ansatz (4) abstützt, wobei das zweite Profil (2) mit dem Ansatz (4) zusammenwirkt, um die Auskehlung (7) zu schließen und als Amboss für die Feuerwerkszündschnur (3) zu dienen,
**dadurch gekennzeichnet, dass**:
- der Ansatz (4) des ersten Profils (1) eine erste ebene Längsfacette (5) auf der Innenseite seines freien Endes (6) umfasst, wobei die erste Facette (5) geneigt ist, indem sie zum Äußern des durch den Ansatz (4) gebildeten Hakens abweicht;
- das zweite Profil (2) auf der Außenseite seines freien Endes (10) gegenüber dem Ansatz (4) eine zweite ebene Längsfacette (11) umfasst, die geneigt ist, indem sie zum Innern des Hakens konvergiert, der von dem Ansatz (4) gebildet wird;
- ein erster Spielraum (12) zwischen den ersten und zweiten Facetten (5, 11) eingerichtet ist; und
- die Feuerwerkszündschnur (3) in der Auskehlung (7) mit einem zweiten Spielraum (14) parallel zur Dicke (E) der ersten und zweiten Profile (1, 2) untergebracht ist.

2. Feuerwerksknallkörper nach Anspruch 1,
**dadurch gekennzeichnet, dass** der erste Spielraum (12), der zwischen den ersten und zweiten Facetten (5, 11) eingerichtet ist, einige Zehntelmillimeter beträgt.

3. Feuerwerksknallkörper nach einem der Ansprüche 1 oder 2,
**dadurch gekennzeichnet, dass** der zweite Spielraum (14) zwischen der Feuerwerkszündschnur (3) und der Auskehlung (7) einige Zehntelmillimeter beträgt.

4. Feuerwerksknallkörper nach einem der Ansprüche 1 bis 3,
**dadurch gekennzeichnet, dass** er Mittel (13A) zum Positionieren der Feuerwerkszündschnur (3) in der Auskehlung (7) parallel zu der Richtung (L), die der Breite der ersten und zweiten Profile (1, 2) entspricht, umfasst.

5. Feuerwerksknallkörper nach einem der Ansprüche 1 bis 4,
**dadurch gekennzeichnet, dass** das zweite Profil (2) sich an der Rippe (15) über einen oder mehrere Unterlegkeile (16) abstützt.

6. Feuerwerksknallkörper nach Anspruch 5, wobei die ersten und zweiten Profile (1, 2) über Befestigungsmittel (9), die daran entlang verteilt sind, fest verbunden sind,
**dadurch gekennzeichnet, dass** die Unterlegkeile (16) an den ersten und zweiten Profilen (1, 2) entlang den Befestigungsmitteln (9) entsprechend verteilt sind und durch letztere befestigt werden.

7. Feuerwerksknallkörper nach Anspruch 5, wobei die ersten und zweiten Profile (1, 2) über Befestigungsmittel (9), die daran entlang verteilt sind, fest verbunden sind,
**dadurch gekennzeichnet, dass** die Unterlegkeile ein drittes durchgehendes Profil (16) bilden, das sich über die Länge der ersten und zweiten Profile (1, 2) hinweg erstreckt und damit durch die Befestigungsmittel (9) fest verbunden ist.
